# EUROPEAN PATENT APPLICATION

(11) **EP 4 834 694 A1**
(43) Date of publication of application: **04.11.2026**
(21) Application number: 26174731.5
(22) Date of filing: 27.04.2026
(51) Int. Cl.: B61B 12/12, B61B 12/06

(54) **AERIAL CABLE TRANSPORT SYSTEM, IN PARTICULAR FOR PASSENGER, WITH CONTROL SYSTEM OF THE CLAMP FOR SELECTIVE COUPLING OF TRANSPORT UNITS TO THE HAULING CABLE**

(30) Priority: 29.04.2025 IT 202500009477
(71) Applicant: LEITNER S.p.A., 39049 Vipiteno (BZ) (IT)
(72) Inventor: TSCHINKEL, Guenter, 39049 Vipiteno (BZ) (IT)
(74) Representative: Studio Torta S.p.A.

(57) **Abstract**

Aerial cable transport system, in particular for passenger; the system comprises: two opposite terminal stations; a hauling cable running between stations; a plurality of transport units; wherein each transport unit comprises a clamp selectively switchable between a closed and an open configuration, the clamp being in the closed configuration outside the stations to couple the corresponding transport unit to the hauling cable and in the open configuration inside the stations to release the coupling between the transport unit and the hauling cable; wherein the system (1) further comprises: a control system of the clamp comprising at least an image capture device and an evaluation unit connected to the evaluation unit; wherein the evaluation unit is configured to analyze the image of the clamp captured by the image capture device and to generate an alarm signal based on the result of this analysis.

## Description

### Cross-Reference to related applications

This patent application claims priority from Italian patent application no. 102025000009477 filed on April 29, 2025, the entire disclosure of which is incorporated herein by reference.

### Technical field of the invention

The technical field of reference of the present invention relates to aerial cable transport systems. A system of this technical field comprises a plurality of transport units that run in aerial configuration between two terminal stations at opposite ends of the system moved by a hauling cable. Each transport unit comprises a clamp selectively switchable between a closed and an open configuration. In particular, the clamp is in the closed configuration outside the stations to couple the corresponding transport units to the hauling cable while it is in the open configuration inside the stations to release the coupling between the transport units and the hauling cable. In this context, the present invention will tackle the problem of how to provide the system with an innovative control system of the clamps to check their integrity (i.e., whether all the components are present), correct operation (i.e., whether in a given point the components are in the correct position) and wear (i.e., the state of aging of the components).

### Background art

As is known, an aerial cable transport system, in particular for passenger, is a system in which a plurality of transport units, for example gondolas or chairs or both gondolas or chairs in the same system, are moved one after another along a predetermined route. This route is delimited at the opposite ends by two terminal stations for loading and unloading, usually called mountain and valley stations in mountain systems, and is defined by at least one cable that extends between these stations (usually in two parallel uphill and downhill lines). Between the terminal stations there can be one or more intermediate loading and unloading stations and also (but not necessarily) at least one station for storing transport units when not in line. For the purposes of the present invention, reference is made to systems with "at least one cable" as the number of cables present is not a limiting feature. In other words, according to the present invention, only the hauling cable, which performs both the function of support cable and of hauling cable and is moved in a loop between the stations, or one or two fixed (unmoving) support cables and one hauling cable, can be present. The "in line" transport speed between the stations is thus defined by the speed of the hauling cable. In the loading/unloading stations there is the need to advance the transport units at a slower speed with respect to the in-line section to allow passengers to load and unload safely. To avoid slowing down the units travelling outside the stations (in-line), when the transport units enter the station they are released from the hauling cable and are moved by other devices, such as a plurality of rotating tyres, and supported by specific guide rails. Naturally, at the exit from the stations the units couple once again to the hauling cable and continue in aerial configuration. To allow this selective coupling of the transport units to the hauling cable, each transport unit is provided with a clamp selectively switchable between a closed and an open configuration. The clamp is in the closed configuration outside the stations to couple the corresponding transport unit to the hauling cable while at least during entry to the station it is in the open configuration inside the stations to release the coupling between the transport unit and the hauling cable. In particular, at least one spring is provided to force the clamp into the closed configuration while the open configuration is forced in the station by acting on a specific lever of the clamp through a rail along which the clamp advances. This rail is configured to extend along the station such that at entry it receives the clamp closed and coupled to the cable, during the progressive entry into the station a rail called "inlet rail" progressively forces the opening lever of the clamp to open its jaws. At this point, the cable is diverted and moves away from the clamp which continues into the station. At the exit from the station the clamp travels along a second rail known as "outlet rail" in which the action on the lever is progressively removed and under the force of the spring the clamp returns to the closed position. Naturally, before it closes the hauling cable is once again diverted to be appropriately inserted into the groove of the jaw of the clamp.

The above description, in particular the details of the clamp and of the inlet and outlet rails provided in the station, is a subject well known to the person skilled in the art. Moreover, considering that the specific structural implementation of these elements is not limiting for the purposes of the present invention, further construction details are not necessary to understand the technical context of the present invention.

As is known, it is necessary to check the clamp to verify its integrity, correct operation and wear. These checks are currently carried in different ways. For example, a visual check is carried out by an operator in the station with the purpose of checking the integrity of the clamp, i.e., that all the components of the clamp are correctly present. Another type of check is aimed at checking the condition of wear of the components of the clamp and is carried out by an operator with the system shut down by means of appropriate gauge tools on the clamp itself. Another check is linked to correct operation of the clamp, i.e., to the transition from the closed to the open configuration and vice versa. This check is carried out by providing in station, along the inlet and outlet rails, switches actuated by suitable mechanical profiling elements. If at a profiling element the clamp is in the correct configuration, the clamp passes without touching the profiling element which thus does not actuate the corresponding switch. If at a profiling element the clamp is not in the correct configuration, the passing clamp impacts the profiling element and the corresponding switch is actuated to trigger an alarm procedure.

Starting from these prior art practices, the object of the present invention is to provide the system with an innovative system to control the clamp that is able to autonomously carry out all the aforesaid checks currently delegated to different methods.

JP 2009 073424 A discloses a device and method for detecting incomplete gripping of a clamp. This system uses a shape measurement sensor as an optical profilometer using a light-cutting method to measure the shape of a cross-section to generate shape data. In JP 2009 073424 A the controller compares the measured shape data with a stored master shape to detect deviations.

### Subject matter and summary of the invention

According to the present invention, there is proposed an aerial cable transport system as defined in the appended claims.

In particular, the system of the present invention comprises at least the following elements:
- two terminal stations at opposite ends of the system in which passenger may load and unload; preferably the stations are U-shaped in plan to produce two parallel lines of the system (known as uphill line and downhill line in mountain systems);
- a hauling cable running between stations; the system can be a single cable system with only the hauling cable that also acts as support cable or one or two support cables can also be provided in addition to the hauling cable; the hauling cable is usually a closed loop cable driven by pulleys (one of which is motorized) installed in the terminal stations;
- a plurality of transport units, for example chairs or gondolas or both chairs and gondolas in which passengers are transported between the terminal stations where loading and unloading takes place.

Each transport unit comprises a clamp selectively switchable between a closed and an open configuration. As is known, the clamp is in the closed configuration outside the stations and couples the corresponding transport unit to the hauling cable while at the entry to the stations the clamp is forced into the open configuration to release the coupling between the transport unit and the hauling cable.

All the elements listed above as elements present in the system are known to the person skilled in the art. An innovative aspect of the present invention is the fact that it provides a control system of the clamp of automatic and autonomous type (i.e., capable of generating an alarm signal also with no operator present) which comprises at least an
image capture device and an evaluation unit. Each image capture device is arranged at a corresponding control point along the system, such that when the transport unit passes by the control point the corresponding clamp is in the image capture range of the image capture device and the image capture device captures at least one image (or also a video) of the clamp. Each image capture device is connected to the evaluation unit such that the at least one image of the clamp captured by the image capture device is transmitted to the evaluation unit. The evaluation unit is configured to analyze the image of the clamp captured by the image capture device and to generate an alarm signal based on the result of this analysis.

A first type of analysis that can be performed by the evaluation unit is aimed at checking the integrity of the clamp, i.e., whether all components of the clamp are present and to generate an alarm signal if at least one component is missing. This first type of analysis allows the current practice, which requires a visual check carried out in station by an operator, to be overcome or integrated.

A second type of analysis that can be performed by the evaluation unit is aimed at verifying whether at the control point the clamp is effectively in the correct configuration. Correct configuration is meant both as whether the clamp is open or closed where required, and whether it is raised due to presence of snow between clamp and support. To perform this analysis the evaluation unit is provided in the memory with a virtual image of the clamp that reproduces the correct configuration that the clamp should have at the control point and performs a comparison between the image of the clamp captured by the image capture device and the aforesaid virtual image. In particular, this comparison is carried out by superimposition of the image of the clamp captured by the image capture device with the virtual image of the clamp and an alarm signal is generated if the actual image of the clamp does not coincide with the virtual image of the clamp, for example if it exceeds the edge of the virtual image of the clamp in at least one point. This second type of analysis allows the current practice, which requires the presence of mechanical profiling element with a switch arranged along the system that are impacted by the clamp at that point if it is in an incorrect configuration, to be overcome or integrated.

A third type of analysis that can be performed by the evaluation unit is aimed at checking the wear of the components of the clamp. This analysis is also performed by superimposition of the image of the clamp captured by the image capture device with the virtual image of the clamp and the distance between the edges of the actual image of the clamp and of the virtual image of the clamp is controlled. If this distance exceeds a threshold value, an alarm signal is generated. This third type of analysis allows the current practice, which requires the use of manual tools, to be overcome or integrated.

The alarm signal can be implemented in various ways. It can be a visual light signal, an acoustic signal, stopping of the system and/or transmission of the notification of the generation of this alarm to an operator in one of the stations or transmission to a remote location.

The image capture device can be a video camera or any other equivalent device.

Preferably, there can be at least one image capture device at a location such as to capture at least one image of the clamp when the transport unit is outside the stations and/or at least one image capture device at a location such as to capture at least one image of the clamp when the transport unit is inside the stations.

Preferably, a display device connected to the evaluation unit and configured to display the outcome of the analysis conducted by the evaluation unit can be present in one of the stations or in a remote position. In particular, the display device is configured to display the superimposition of the actual image of the clamp with a virtual image of the clamp such that an operator can visually check the correct outcome of the analysis conducted by the evaluation unit.

### Brief description of the drawings

For a better understanding of the present invention an embodiment will now be described purely by way of non-limiting example, with reference to the accompanying drawings, wherein
- Fig. 1 is a schematic view of an aerial cable transport system;
- Fig. 2 is an enlarged schematic view of the detail indicated with II in Fig. 1;
- Figs. 3 and 4 are views of a component of the system of Fig. 1, i.e., they show an example of a clamp that represents the element controlled in an innovative way according to the present invention;
- Figs. 5 and 6 show an example of embodiment of the present invention in which the clamp is controlled by an innovative control system and the outcome of this control is displayed on a specific screen for a possible visual check by an operator in station or in a remote location.

### Preferred embodiments of the invention

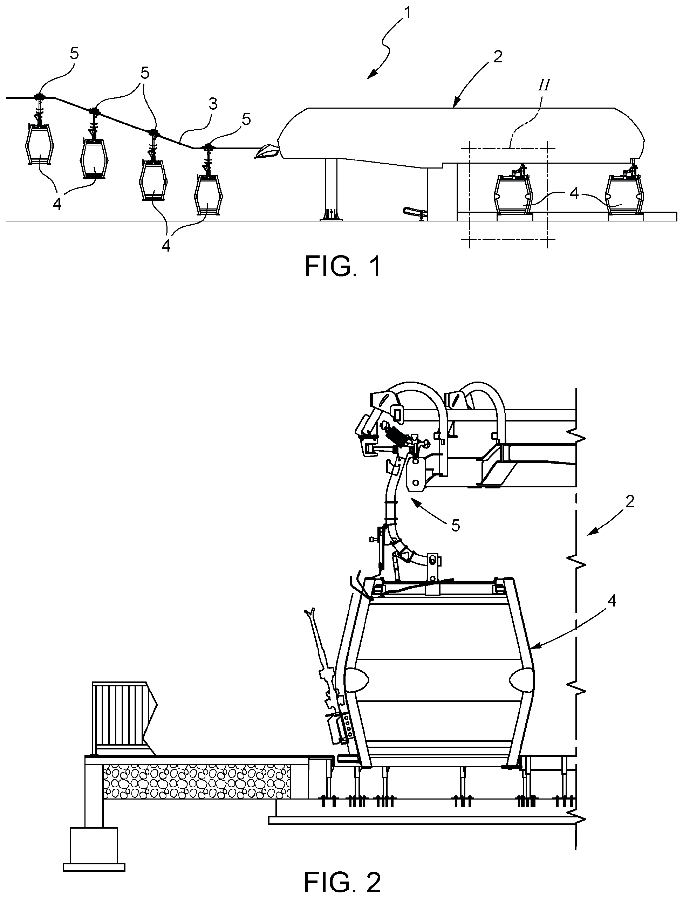

Fig. 1 is a schematic view of an aerial cable transport system which can be improved thanks to the present invention. In particular, in Fig. 1 a portion of a system 1, i.e., a terminal station 2, a hauling and support cable 3 and a plurality of gondolas 4, is visible. As can be seen, outside the station 2 the gondolas 4 are coupled to the hauling cable 3 through a clamp 5 at the upper end of a suspension arm connected below to the roof of the corresponding gondola.

Fig. 2 is an enlarged schematic view of the detail indicated with II in Fig. 1 and shows a gondola 5 inside the station 2. At the entry to the station the coupling of the cable 3 to the clamp 5 is released, in particular the clamp is opened, and the gondola advances thrust by motorized wheels that act as advancing device in place of the cable. In particular, as can be seen in Fig. 2, some rollers of the clamp collaborate with specific rail guides or rails. The configuration and the extension of these rails along the station is variable and imparts specific movements to movable components of the clamp to open it at the entry to the station and close at the exit from the station (as known).

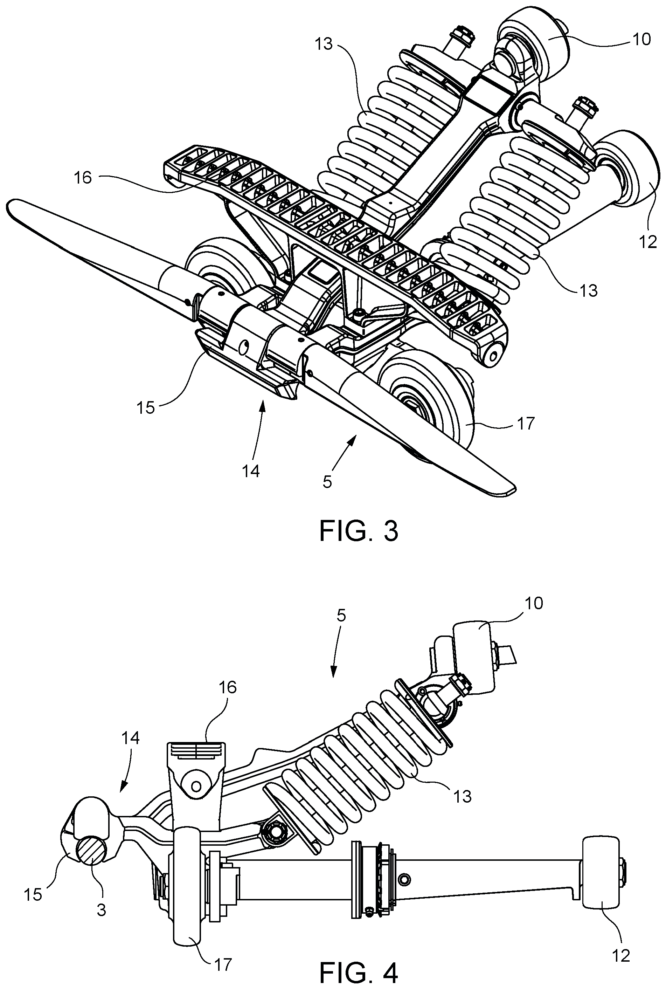

Figs. 3 and 4 show an example of a clamp that represents the element controlled in an innovative way according to the present invention. In this example, the clamp 5 comprises a handling roller 10 that runs on the inlet and outlet rails in the station to control coupling and release of the cable 3 through opening and closing of the jaw, a guide roller 12 through which the clamp (and hence the gondola) is held and supported in the station 2, springs 13 that force the clamp into the closed configuration, a clamp body 14 with a movable jaw 15 controlled by the handling roller 10, a knurled shoe 16 on which the motorized wheels for advancing in the station 2 act, sliding rollers 17. In Fig. 3 the cable 3 is also schematized for clarity.

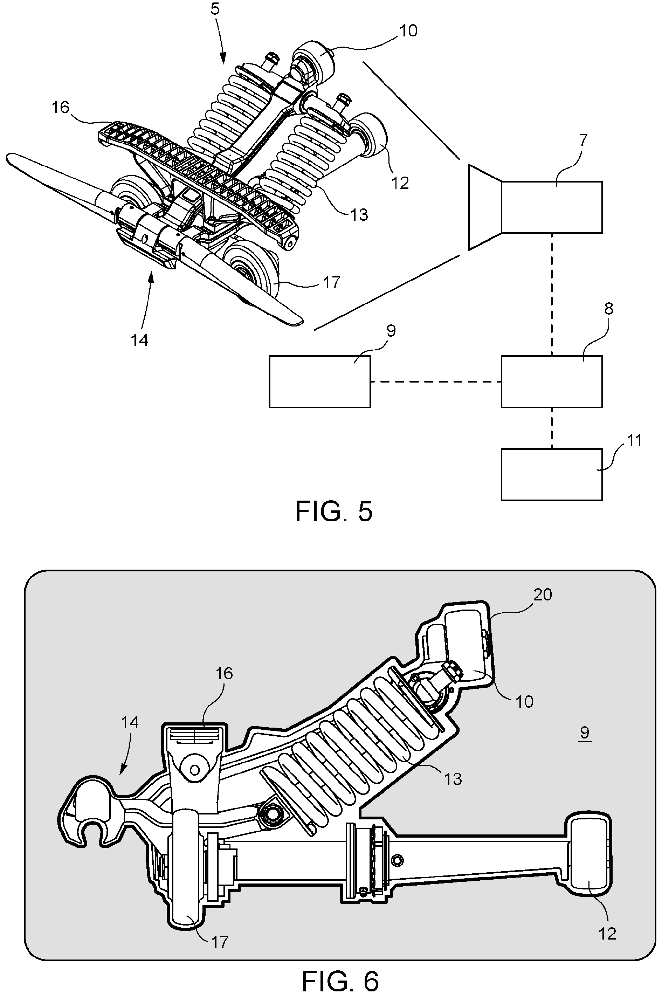

Figs. 5 and 6 show an example of embodiment of the present invention in which the clamp 5 is controlled by an innovative control system. The reference numbers 7 8 and 9 schematize a camera 7 installed along the system 1 at a control point in which it is of interest to control the clamp 5. Naturally, numerous cameras 7 can be present in the system 1 at corresponding control points and the camera itself is merely an example of an image capture device. Therefore, when the clamp 5 transits at the control point the camera 7 captures one or more images of the clamp 5 and transmits this image or these images to an evaluation or control unit 8 (of control unit with calculation capacity type). This evaluation unit 8 is configured to perform several analyses of the images received, in particular it checks whether all the components of the clamp 5 are present with respect to a list saved in the unit 8 and whether the components of the clamp 5 are in the correct configuration, for example whether the jaw is open or closed with respect to an indication saved in the unit 8 regarding the correct configuration that must be implemented at the control point. Moreover, the unit 8 also checks the condition of wear of the components of the clamp 5, for example of the rollers 10, 12 e 17. These checks are performed by the unit 8 by superimposition of the image of the clamp 5 received from the camera 7 with a virtual image of the clamp (saved in the unit 8) that represents the correct configuration that the clamp should have at the control point. In substance, the unit 8 compares the actual image of the clamp with the contour of the virtual image, and based on the result of this comparison, controls one or more alarm devices 11 (which can be visual, acoustic, etc.) or can control shutdown of the system. The outcome of this check and the superimposition of the actual image of the clamp 5 with the edge 20 of the virtual image can also be transmitted to a display device 9 to allow an operator, in the station 2 or located remotely, to verify the analysis conducted by the unit 8. Fig. 6 schematically represents this display device 9 in the case of a check with a positive outcome in which the clamp 5 does not exceed an edge 20 defined by the virtual image of the clamp in its correct configuration at the control point in any point.

Finally, it is clear that modifications and variations can be made to the system described and illustrated without departing from the scope of protection of the present invention, as defined in the appended claims.

## Claims

1. Aerial cable transport system (1), in particular for passenger, wherein the system (1) comprises:
- two opposite terminal stations (2;)
- a hauling cable (3) running between stations (2);
- a plurality of transport units (4);
wherein each transport unit (4) comprises a clamp (5) selectively switchable between a closed and an open configuration, the clamp (5) being in the closed configuration outside the stations (2) to couple the corresponding transport unit (4) to the hauling cable (3) and in the open configuration inside the stations (2) to release the coupling between the transport unit (4) and the hauling cable (3);
**characterized in that** the system (1) further comprises:
- a control system of the clamp (5) comprising at least an image capture device (7) and an evaluation unit (8);
wherein each image capture device (7) is arranged at a corresponding control point, such that when the transport unit (4) passes by the control point the corresponding clamp (5) is in the capture range of the image capture device (7) and the image capture device (7) captures at least one image of the clamp (5);
wherein each image capture device (7) is connected to the evaluation unit (8) such that the at least one image of the clamp (5) captured by the image capture device (7) is transmitted to the evaluation unit (8);
wherein the evaluation unit (8) is configured to analyze the image of the clamp (5) captured by the image capture device (7) and to generate an alarm signal based on the result of this analysis.

2. System according to claim 1, wherein the evaluation unit (8) is configured to check whether all components of the clamp (5) are present and to generate an alarm signal if at least one component is missing.

3. System according to claim 1 or 2, wherein the evaluation unit (8) is configured to compare the image of the clamp (5) captured by the image capture device (7) with a virtual image of the clamp (5) corresponding to the correct configuration that the clamp (5) should have at the control point and to generate an alarm signal based on the result of this comparison.

4. System according to claim 3, wherein the evaluation unit (8) is configured to compare by superimposition the image of the clamp (5) captured by the image capture device (7) with a virtual image of the clamp (5) corresponding to the correct configuration that the clamp (5) should have at the control point, and to generate an alarm signal if the image of the clamp (5) captured by the image capture device (7) exceeds the edge of the virtual image of the clamp (5) in at least one point.

5. System according to claim 3 or 4, wherein the evaluation unit (8) is configured to compare by superimposition the image of the clamp (5) captured by the image capture device (7) with a virtual image of the clamp (5) corresponding to the correct configuration that the clamp (5) should have at the control point, and to generate an alarm signal if the image of the clamp (5) captured by the image capture device (7) does not exceed the contour of the virtual image of the clamp (5) and if in at least one point between the image of the clamp (5) captured by the image capture device (7) and the edge of the virtual image of the clamp (5) there is a distance greater than a threshold value.

6. System according to any one of the preceding claims, wherein at least one of the image capture devices (5) is a video camera.

7. System according to any one of the preceding claims, wherein at least one of the image capture devices (5) is arranged at a location such that at least one image of the clamp (5) is captured when the transport unit (3) is outside the stations (2).

8. System according to any one of the preceding claims, wherein one of the image capture devices (5) is arranged at a location such that at least one image of the clamp (5) is captured when the transport unit (3) is inside the stations (2).

9. System according to any one of the preceding claims, wherein the control system of the clamp (5) comprises a display device (9) connected to the evaluation unit (8) and configured to display the outcome of the analysis conducted by the evaluation unit (8).

10. System according to claims 9 and 4, wherein the display device (9) is configured to display the superimposition of the image of the clamp (5) captured by the image capture device (7) with the virtual image of the clamp(5).

11. Method for operating an aerial cable transport system (1), in particular for passenger; the method comprises the steps of:
(a) providing a system with two opposite end stations (2), a hauling cable (3) running between stations (2), a plurality of transport units (4); wherein each transport unit (4) comprises a clamp (5) selectively switchable between a closed and an open configuration, the clamp (5) being in the closed configuration outside the stations (2) to couple the corresponding transport unit (4) to the hauling cable (3) and in the open configuration inside the stations (2) to release the coupling between the corresponding transport unit (4) and the hauling cable (3);
(b) capturing through an image capture device (7) at least one image of the clamp (5) at least one control point along the system;
(c) analyzing through an evaluation unit (8) the image of the clamp (5) captured by the image capture device (7);
(d) generating or not generating an alarm signal based on the result of step (c).

12. Method according to claim 11, wherein step (c) comprises the step of checking whether all components of the clamp (5) are present.

13. Method according to claim 11 or 12, wherein step (c) comprises the step of comparing the image of the clamp (5) captured by the image capture device (7) with a virtual image of the clamp (5) corresponding to the correct configuration that the clamp (5) should have at the control point.

14. Method according to claim 13, wherein step c) comprises the step of superimposing the image of the clamp (5) captured by the image capture device (7) with a virtual image of the clamp (5) corresponding to the correct configuration that the clamp (5) should have at the control point; the alarm signal of step (d) is generated if the image of the clamp (5) captured by the image capture device (7) exceeds in at least one point the edge of the virtual image of the clamp (5) or if the image of the clamp (5) captured by the image capture device (7) does not exceed the edge of the virtual image of the clamp (5) and in at least one point between the image of the clamp (5) captured by the image capture device (7) and the edge of the virtual image of the clamp (5) there is a distance greater than a threshold value.

15. Method according to any of the preceding claims 11 to 14, wherein step (b) comprises the step of capturing at least one image of the clamp (5) when the transport unit (3) is outside the stations (2) and/or when the transport unit (3) is inside the stations (2).

16. Method according to any one of the preceding claims 11 to 15, wherein the method further comprises the step of:
(e) displaying through a display device (9) connected to the evaluation unit (8) the outcome of the analysis conducted by the evaluation unit (8).

17. Method according to claims 16 and 14, wherein step (e) comprises the step of displaying the superimposition of the image of the clamp (5) captured by the image capture device (7) with the virtual image of the clamp (5).
